# EUROPÄISCHE PATENTANMELDUNG

(11) **EP 2 610 439 A1**
(43) Veröffentlichungstag der Anmeldung: **03.07.2013**
(21) Anmeldenummer: 11010310.8
(22) Anmeldetag: 30.12.2011
(51) Int. Cl.: F01D 25/28, B25B 27/06

(54) **Verfahren zum Ziehen und/oder Einsetzen eines Turbinenlagers sowie Vorrichtung zur Durchführung des Verfahrens**

(71) Anmelder: Siemens Aktiengesellschaft, 80333 München (DE)
(72) Erfinder: Müller, Dirk, 45470 Mühlheim a.d.Ruhr (DE)

(57) **Zusammenfassung**

Die Erfindung betrifft ein Verfahren und eine vorrichtung (30) zur Durchführung des Verfahrens zur Demontage eines Turbinenlagers (26) oder eines Lagersegments einer vorzugsweise stationären Turbomaschine mit einem vorzugsweise hälftig teilbaren Gehäuse bei geschlossenem Gehäuse mit den Arbeitsschritten: Abstützen des Rotors (12) zur Befreiung des Turbinenlagers (26) von der Gewichtskraft des Rotors (12), Befestigen einer Trägerplatte (34) an einem Turbinenlagergehäuses (10), Anbringen von zwei zueinander parallelen, schienenartigen Trägern (36) an der Trägerplatte (34) und Befestigen eines Querträgers (40) an Enden (38) der Träger (36), Befestigen einer Widerlagerplatte (43) mit mindestens zwei Druck-/zugstangen (46) am Turbinenlagergehäuse (10) und Befestigen der Druck-/Zugstangen (46) am Turbinenlager (10) sowie das Lösen der Befestigung des Turbinenlagers (26) vom Turbinenlagergehäuse (10) und Herausziehen des in seiner Betriebslage befindlichen Turbinenlagers (26) aus dem Turbinenlagergehäuse (10) mit Hilfe der Druck-/Zugstangen (46). Mit Hilfe der vorgeschlagenen Lösung kann die Stillstandszeit von stationären Turbomaschinen verkürzt werden.

## Beschreibung

pie Erfindung betrifft ein Verfahren zum Ziehen und/oder Einsetzen eines Turbinenlagers vom Rotor bzw, auf den Rotor einer vorzugsweise stationären Turbomaschine bei geschloesenem Gehäuse. Weiter betrifft die Erfindung eine Vorrichtung geeignet zur Durchführung des verfahrens.

Stationäre Gasturbinen sind aus dem umfangreich vorhandenen Stand der Technik längstens bekannt. Deren Rotoren werden üblicherweise sowohl an einem verdichterseitigen Ende als auch an einem turbinenaeitigen Ende radial gelagert. Das turbinenseitige Radiallager - auch Turbinenlager genannt - von Gasturbinen befindet sich innerhalb der Abgasstrecke der Gasturbine, zumeist unmittelbar hinter der letzten Laufachaufelreihe der Turbineneinheit. Zur Lagerung sind in der Abgasstrecke meist in geringer Anzahl, d.h. vier, fünf oder sechs, sich radial erstreckende Lagerstreben vorgesehen, in deren Zentrum eine Einhausung für das Turbinenlagergehäuse und das turbinenseitige Radiallager angesiedelt ist.

Defekte am Turbinenlager, an den Lagerschalen oder auch an den Lagersegmenten - den so genannten Pads - können dazu führen, dass diese Bauteile ausgetauscht werden müssen. Bei stationären Gasturbinen, die üblicherweise mit einem in einer Teilungsebene hälftig teilbaren Gehäuse ausgestattet sind, ist im Reparaturfall zuerst die obere Gehäusehälfte der Gasturbine von der unteren Gehäusehälfte zu lösen und dann abzuheben. Anschließend ist der in der unteren Gehäusehälfte eingelegte Rotor inklusive des Turbinenlagers zu entnehmen. Erst danach kann das Lager vom Rotor abgezogen werden.

Diese Vorgehensweise ist jedoch besonders zeitaufwändig, da nach dem zeitintensiven Abkühlen der Gasturbine eine längere Rüstzeit zum Lösen der Gehäuseverschraubungen, zum Aufdecken der Gasturbine und zum Entnehmen des Rotors erforderlich ist. Nach der Reparatur des defekten Bauteils muss der Rotor wieder in die untere Gehäusehälfte eingelegt und ausgerichtet werden. Anschließend ist die obere Gehäusehälfte zum Schließen der Gasturbine zu montieren. Sonach sind die Gehäusehälften miteinander über die bekannten verschraubungen miteinander zu befestigen. Alles zusammen erfordert eine längere Stillstandzeit der stationären Gasturbine.

Aus diesen Gründen besteht das Bedürfnis, die Stillstandzeit der Gasturbine zu verkürzen.

Aufgabe der Erfindung ist daher die Bereitstellung eines Verfahrens, welches die vorgenannten Nachteile überwindet. Weitere Aufgabe der Erfindung ist die Bereitstellung eines das Verfahren unterstützenden Werkzeugs.

Die auf das Verfahren gerichtete Aufgabe wird mit einem Verfahren gemäß den Merkmalen des Anspruchs 1, einem Verfahren gemäß dem Merkmalen des Anspruchs 4 und die auf das Werkzeug gerichtete Aufgabe mit einer Vorrichtung nach Anspruch 7 gelöst.

In den abhängigen Ansprüchen sind vorteilhafte Merkmale aufgelistet, die entsprechend der Anspruchskategorie in beliebiger Weise miteinander kombiniert werden können.

Zur Demontage des Turbinenlagers bzw. dessen Bestandteilen ist erfindungsgemäß vorgesehen, dass zuerst der in der stationären Turbomaschine angeordnete Rotor abgestützt oder gehalten wird, um das Turbinenlager von der Gewichtskraft des Rotors zu befreien. Anschließend wird eine Trägerplatte für Träger an einem Turbinenlagergehäuse befestigt. Danach werden zwei zueinander parallele, schienenartige Träger an der Trägerplatte angebracht, wonach an denjenigen Enden der Träger, die dem Abgasdiffusor zugewandt sind, ein Querträger. befestigt wird. Vorzugsweise wird anschließend eine Widerlagerplatte mit mindestens zwei Druck-/Zugstangen am Turbinenlagergehäuse befestigt, woraufhin die Druck-/Zugatangen am Turbinenlager befestigt werden. Abschließend wird das in seiner Betriebslage befindliche Turbinenlager aus dem Turbinenlagergehäuse gezogen. Sofern eine Widerlageplatte mit den Druck-/Zugetangen verwendet wird, erfolgt die Verschiebung selbstverständlich mit Hilfe der Druck-/zugstangen.

Mit Hilfe des vorgeschlagenen Verfahrens ist es möglich, das Turbinenlager der stationären Turbomaschine oder dessen Segmente der Turbomaschine zu entnehmen, ohne das die 'Turbomaschine selber aufgedeckt und deren Rotor entnommen werden muss. Das verfahren lasst sich folglich bei geschlossenem Turbomaschinengehäuse - d.h. bei montierter oberer Gehäusehälfte - durchführen. Voraussetzung hierzu ist lediglich, dass im unmittelbaren Bereich des Turbinenlagers ein augreichender Freiraum für die Monteure und die erforderliche Vorrichtung zur Durchführung der Arbeiten vorhanden ist. Sofern die Turbomaschine als stationäre Gasturbine zur Energieerzeugung ausgebildet ist und die Gasturbinen-Nannleistung etwa 100MW und mehr beträgt, sind diese Freiräume zumeist Teil einer Abgasstrecke mit derartigem Ausmaß, das diese sogar von Monteuren begehbar sind. Der Zugang zur Abgasstrecke bzw. Freiraum erfolgt dann über ein so genanntes Mannloch, welches in der Kanalbegrenzung der Abgasstrecke oder des Abgasdiffusors vorgesehen ist. Bei kleineren Bauformen von Turbomaschinen ist es denkbar, dass die Kanalbegrenzung des Abgaskanals teilweise oder vollständig entfernt wird, um den erforderlichen Freiraum zu schaffen.

Nach der Demontage des Turbinenlagers und der Reparatur/Austauschs wird erfindungsgemäß der Zusammenbau des Turbinenlagers in dazu korrespondierender Weise durchgeführt. Es ist vorgesehen, dass der Rotor der stationären Turbomaschine bereits abgestützt oder gehalten ist. wenn nicht noch vorhanden, wird die Trägerplatte an einer Stirnseite eines Turbinenlagergehäuses befestigt, woran zwei schienenartige Träger an der Trägerplatte angebracht werden. Sonach kann ein Querträger an den beiden abgasgehäuseseitigen Trägerenden befestigt werden. Anschließend wird das zu montierende Turbinenlager auf den Trägern abgesetzt und in Richtung des Turbinenlagers in eine Zwischenposition verschoben. vorzugsweise wird danach eine Widerlagerplatte mit mindestens zwei verschiebbaren Druck-/zugstangen am Turbinenlagergehäuse und die beiden Drucke/Zugstangen am Turhinenlager befestigt. Anschließend kann das Turbinenlager mit Hilfe der Druck-/Zugstangen aus der Zwiechenposition in seine Einhauposition, d. h. Betriebslage eingesetzt werden.

Durch die Anwendung der erfindungsgemäßen Verfahren zur Demontage bzw. Montage eines Turbinenlagers wird die Rüstzeit zur Reparatur der Turbomaschine bzw. zur Wartung der Turbomaschine signifikant verkürzt, was deren Verfügbarkeit signifikant erhöht.

Mit Hilfe der Träger kann das Turbinenlager allein aufgrund einer - in Bezug auf die Maschinenachse der Turbomaschine - axialen Verschiebungen aus seiner Betriebslage herausgezogen werden, ohne das weitere Hilfsmittel zum Halten der Gewichtskraft des Turbinenlagers erforderlich sind. Die Träger enden turbinenseitig folglich unmittelbar am Turbinenlager und nehmen somit mit dem Ziehen bzw: vor dem Einsetzen die Gewichtskraft des Turbinenlagers auf. Diese wird dann über die Trägerplatte, das Turbinenlagergehäuse und das Gehäuse der stationären Turbomaschine in das Fundament abgeleitet. Dementsprechend ist diese Komponente der Vorrichtung so ausgelegt, dass die Gewichtskräfte stets sicher abgeführt werden. Besonders vorteilhaft sind die beiden Träger etwa auf einer 4-Uhr-und 8-Uhr-Position des Turbinenlagers angesiedelt, so dass die resultierende Gewichtskraft des Turbinenlagers mittig zwischen diesen auf die beiden Träger einwirkt. Um dann ein Auseinanderklaffen der beiden Trägerenden zu verhindern, ist an denjenigen Enden der Träger, welche ansonsten im Abgaskanal frei enden würden, ein Querträger befestigt. Hierdurch bleiben die beiden schienenartigen Träger auch im Belastungsfall durch das Turbinenlager stets parallel zueinander, ohne daas die Gefahr besteht, dass die beiden Träger sich auseinander bewegen und dass das Turbinenlager zwischen ihnen hindurchrutscht. Gleichzeitig begrenzt der Querträger den Verschiebeweg des Turbinenlagers.

Die Druck-/Zugstangen ermöglichen eine - in Bezug zur Maschinenachse der Turbomaschine - stets achsparallele Bewegung des Turbinenlagers, ohne dass währenddessen ein Verkanten des Turbinenlagers am bzw. im Turbinenlagergehäuse auftritt. Dies gewährleistet eine versahiebbarkeit des zu montierenden bzw. demontierenden Turbinenlagers und schützt diese Turbinenlagerbauteile vor Beschädigungen, aufgrund von Verkantungen,

Die erfindungsgemäße Vorrichtung zur Montage und/oder Demontage eines Turbinenlagers, eines Lagersegments oder anderer diverser Teile des Turbinenlagers einer vorzugsweise stationären Turbomaschine mit einem vorzugsweise hälftig teilbaren Gehäuse bei geschlossenem Gehäuse umfasst: eine Trägerplatte zur Befestigung an einem Turbinenlagergehäuse eines Turbinenlagers, zumindest zwei zueinander parallele senkrecht an der Trägerplatte befestigte schienenartige, vorzugsweise mit Rollen bestückte Träger und einem Querträger, welcher an den Trägerenden befestigt ist sowie eine zur Befestigung am Turbinenlagergehäuse vorgesehene Widerlagerplatte mit mindestens zwei daran verschiebbaren Druck-/Zugstangen, welche zur Befestigung an dem zu demontierenden bzw. montierenden Bauteil vorgesehen sind. Vorzugsweise sind die Druck-/Zugstangen hydraulisch an der Widerlagerplatte gekoppelt, so dass die zum Ziehen bzw. Einsetzen des Turbinenlagers erforderliche Kraft ggf. hydraulisch bereitgestellt werden kann.

Um das Turbinenlager mit vergleichsweise geringer Kraft entlang der Träger verschieben zu können, ist vorzugsweise vorgesehen, dass die Träger jeweils als Rollenbahn ausgestaltet sind. Durch die Verwendung von Rollenbahnen kann das gezogene bzw. einzusetzende Turbinenlager mit geringem Kraftaufwand bewegt werden, ohne dass eine maschinelle Unterstützung notwendig ist. Zudem sind die Abrollebenen der Rollenbahnen zueinander geneigt. Die Neigungen der beiden Abrollebenen sind zueinander V-förmig und so gewählt, dass diese stets tangential zur Abrollfläche des Turbinenlagers - oder falls vorhanden - der Gleitelemente ist.

Da Turbinenlager in axialer Richtung auch vergleichsweise schmalbauend ausgebildet sein können und die Abatände zwischen zwei unmittelbar benachbarten Rollen der Rollenbahn in dieser Größenordnung liegen können, empfiehlt sich das Anbringen von Gleitelementen am Turbinenlager für jede Rollenbahn, um sicherzuatellen, dass während der Verschiebung des Turbinenlagers in jeder Verachiebeposition je Rollenbahn das Turbinenlager von mindestens zwei Rollen sicher getragen wird. Auch dies verhindert das Verkanten/Kippen des zu verschiebenden Turbinenlagers.

Weitere Vorteile, Merkmale und Eigenschaften der Erfindung werden anhand eines bevorzugten, Ausführungsbeispiels in den folgenden Zeichnungen näher erläutert, Es zeigen:
- FIG 1: einen Längsteilschnitt: durch ein Gasturbinenabgasgehäuse,
- FIG 2: eine perspektivische Ansicht auf ein Turbinenlagergehäuse aus FIG 1 mit daran befestigter Vorrichtung zum ziehen des Turbinenlagers,
- FIG 3: das Turbinenlager gemäß FIG 2 mit daran angeordneter Vorrichtung zum. Einsetzen des Turbinenlagers,
- FIG 4: die perspektivische Ansicht gemäß FIG 2 mit dem dem Turbinenlagergehäuse entnommenen Turbinenlager,
- FIG 5: das Turbinenlager mit daran angeordneten Gleitelementen.

In allen Figuren sind identische Merkmale mit den gleichen Bezugszeichen versehen.

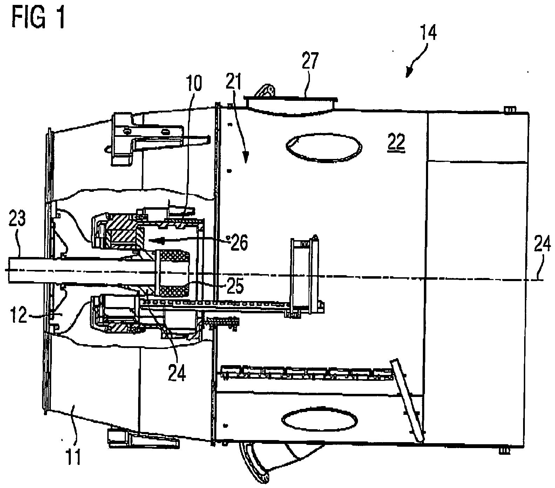

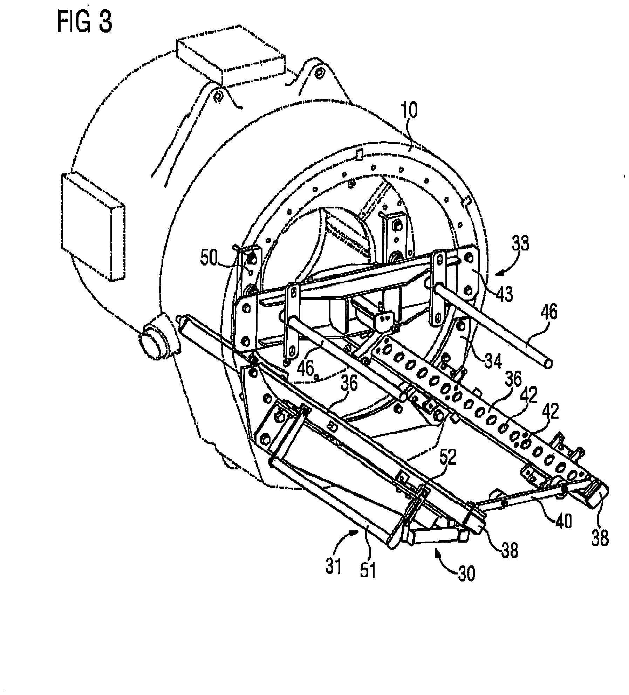

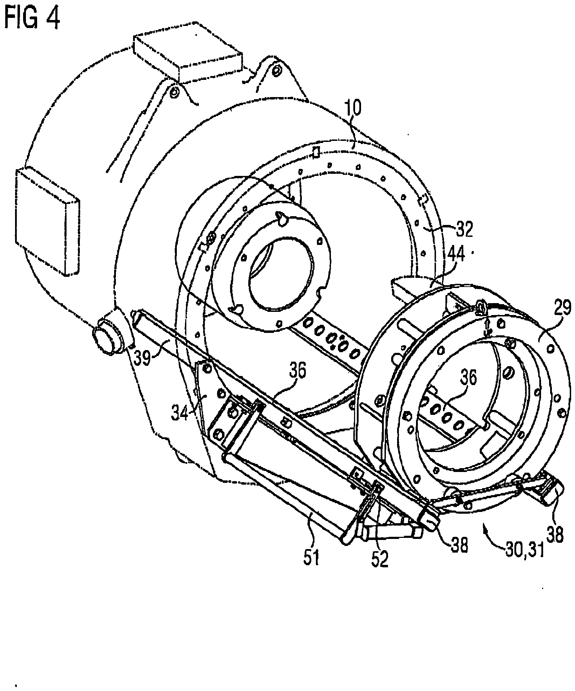

Die FIG 1 zeigt im Längsteilschnitt ein Gasturbinenabgasgehäuse 11 einer als stationären Gasturbine 14 ausgebildeten Turbomaschine. Die Gasturbine 14 weist stromauf des Gasturbinenabgasgehäuses 11 ein (nicht dargestelltes) hälftig teilbares Gehäuse mit einer unteren Gehäusehälfte und einer oberen Gehäusehälfte auf, die in bekannter Art und Weise flanschartig miteinander verbunden und durch entsprechende Verschraubungen miteinander verschraubt sind. Das Gasturbinenabgasgehäuse 11 der Gasturbine 14 ist ungeteilt ausgestaltet und begrenzt als Kanalbegrenzung einen Abgaskanal 21, welcher in einen Abgasdiffusor 22 übergeht. Im Gasturbinenabgasgehäuse 11 sind fünf sich in Radialrichtung erstreckende Lagerstreben 15 (FIG 3, 4) entlang des Umfangs gleichmäßig verteilt, die radial innen eine Lagereinhausung gemeinschaftlich tragen und halten. In der Lagereinhausung ist ein Turbinenlagergehäuse 10 mit einem Turbinenlager 26 zur radialen Lagerung eines Rotors 12 der Gasturbine 14 vorgesehen. In der in FIG 1 gezeigten Ausgestaltung der Gasturbine 14 ist der Rotor 12 in Scheibenbauweise mit einem durch die Scheiben sich zentral erstreckenden Zuganker 23 ausgebildet. Der Zuganker 23 ist auch turbinenendseitig mit einem Gewinde 25 versehen, auf dem eine Zugankermutter 24 aufgeschraubt ist.

Das Turbinenlager 26 umfasst um wesentlichen als Bestandteile einen Lagerring, mehrere Lagersegmente und eine Abdeckplatte.

Des Weiteren ist im Inneren des Abgasdiffusors 22 eine Arbeitsbühne 33 angesiedelt, um einerseits Monteuren eine sichere Standfläche bereitzustellen und andererseits ihnen eine ergonomische Arbeit zu ermöglichen.

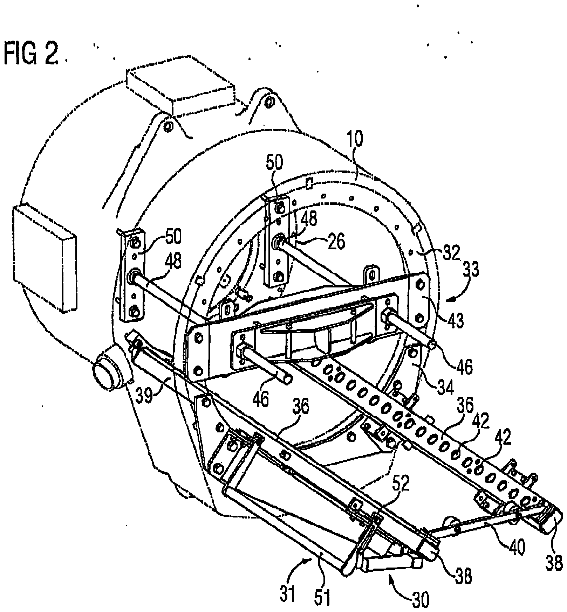

FIG 2 zeigt in perspektivischer Darstellung unter Ausblendung des Rotors und der Kanalbegrenzung des Abgaskanals 21 das in FIG 1 dargestellte Turbinenlagergehäuse 10 in perspektivischer Darstellung. Die Vorrichtung 30 zur Montage und/oder Demontage des Turbinenlagers 26 ist in den FIG 2 bis FIG 4 mit dickerer Linienstärke dargestellt. Das Turbinenlagergehäuse 10 ist mit einer dünneren Liniestärke gezeichnet, so dass Teile davon als transparent anzusehen sind. Die Transparenz bezieht sich jedoch nur auf Elemente der vorrichtung 30. Somit sind die aufgrund der perspektivischen Darstellung im Hintergrund angesiedelten Elemente des Turbinenlagergehäuses 10 durch vordergründige Bestandteile teilweise verdeckt und dementsprechend nicht gezeigt.

vorzugsweise umfasst die Vorrichtung 30 zwei voneinander getrennt handhabbare Komponenten 31, 33, wovon die erste Komponente 31 zwingend erforderlich ist und die zweite Komponente 33 nur optional. Die erste Komponente 31 dient zum Tragen der Gewichtskraft des zu montierenden/zu demontierenden Turbinenlagers 26. Die zweite Komponente 33 dient zum unmittelbaren Herausziehen und/oder zum Einsetzen des Turbinenlagers 26 aus dem bzw. in das Turbinenlagergehäuse 10.

Im Turbinenlagergehäuse 10 befindet sich das in seiner Betriebsposition befindliche Turbinenlager 26, von dem nur ein Teil aufgrund der perspektivischen Darstellung in FIG 2 ersichtlich ist. Das Turbinenlagergehäuse 10 weist eine der Ausströmseite des Abgaskanals 21 zugewandte Stirnseite 32 auf. An dieser Stirnseite 32 ist eine Trägerplatte 34 befestigt. Diese Trägerplatte 34 erstreckt sich über eine Bogenlänge von etwa 160° und ist mittig zur 6-Uhr-Position des Turbinenlagergehäuses 10 befestigt. Auf einer 4-Uhr- und 8-Uhr-Position sind zwei zueinander parallele schienenartige Träger 36 - auch Laufschienen genannt - vorgesehen, die an der Trägerplatte 34 angeschraubt sind. Die zur Ausströmseite weisenden Enden 38 der Träger 36 sind über einen Querträger 40 miteinander fest verbunden. Die diesen Enden 38 gegenüberliegenden Enden 39 der Träger 36 reichen bis an das Turbinenlager 26 unmittelbar heran. Die Träger 36 sind als Rollenbahnen ausgestaltet, jeweils mit einer Vielzahl von Rollen 42, deren Drehachsen je Rollenbahn parallel zueinander ausgerichtat sind. Somit umfasst die erste Komponente 31 die Trägerplatte 34, die Träger 36, den Querträger 40 sowie ein erst weiter unten im Detail beschriebener Sicherungsbügel 51 einschließlich des zugehörigen Verriegelungselements.

Durch den modularen Aufbau der ersten Komponente ist es möglich, deren Bestandteile durch ein Mannloch 27 (FIG 1) in den Abgaskanal 21 einzubringen, ohne dass dessen Kanalbegrenzung entfernt werden muss. Die Komponenten 31, 33 müssen nicht zwingend derartig modular gestaltet sein wie gezeigt. Sofern größere Mannlöcher vorhanden sind oder der Abgasdiffusor 22 teilweise bzw. vollständig entfernt werden kann, können die Komponenten 31, 33 entweder auch aus größeren Baugruppen zusammen gesetzt oder gar einteilig sein.

Eine Widerlagerplatte 43 ist ebenfalls an der Stirnseite 32 des Turbinenlagergehäuses 10 auf einer 9-Uhr-Position und 3-Uhr-Position angeschraubt. An der Widerlagerplatte 43 sind über eine Druck-/Abstützplatte zwei zueinander parallele, verschiebbare Druck-/Zugstangen 46 gelagert. Die dem Turbinenlager 26 zugewandten Enden 48 der Druck-/Zugstangen 46 weisen Befestigungsflansche 50 auf, die mit dem zu demontierenden Turbinenlager 26 verschraubt werden können. Somit umfasst die zweite Komponente 33 die Widerlagerplatte 43, die Druck-/Abstützplatte sowie Druck-/zugstangen 46.

Je nach Ausgestaltung des Turbinenlagers 26 und in Abhängigkeit der zu de-/montierenden Bestandteile des Turbinenlagers 26 können die Befestigungsflansch 50 auch entfallen und/oder andere und/oder weitere Vorrichtungen zum Verbinden der Druck-/Zugstangen 46 mit den entsprechenden Bestandteilen eingesetzt werden. Insbesondere, wenn nur einige der Lagersegmente demontiert werden müssen, ist eine weitere Vorrichtung erforderlich.

Je nach dem, welche Seite der Widerlagerplatte 43 an der Stirnseite 32 des Lagergehäuses 10 befestigt ist, wird die zweite Komponente 33 der Vorrichtung 30 entweder zum ziehen (FIG ,2) des Turbinenlagers 26 oder zum Einsetzen (FIG 3) des Turbinenlager 26 verwendet. Unterschiedliche zweite Komponenten sind folglich nicht erforderlich.

FIG 4 zeigt eine außerhalb des Turbinenlagergehäuses 10 auf den Trägern 36 angesiedelte weitere Vorrichtung 29 mit einem daran angeordnetem Lagersegment 44 des Turbinenlagers 26, nach der Demontage bzw. vor der Montage im Turbinenlagergehäuse 10. Die zweite Komponente 33 der erfindungsgemäßen Vorrichtung 30 wurde nach der Demontage des Turbinenlagers 26 vom Turbinenlagergehäuse 10 gelöst bzw, ist zur Montage des Turbinenlagers 26 im Turbinenlagergehäuse 10 noch zu befestigen. Im letzteren Fall ist jedoch noch vor der Befestigung der zweiten Komponents 33 das Turbinenlager 26 in eine Zwischenposition nahe seiner Betriebslage zu schieben.

Um Beschädigungen am Gewinde 25 des Zugankers 23 zu vermeiden, kann darüber eine Läuferschutzkappe 49 gestülpt sein. Diese wird vorzugsweise vor der Bewegung des Turbinenlagers 26 dem Zugankerende übergestülpt. Der Ein- bzw. Ausbau der Läuferschutzkappe 49 erfolgt unter Zuhilfenahme des Turbinenlagers 26 oder mit dem später erläuterten Dummy-Lager,

Des Weiteren ist in den Figuren 2 bis 4 ein Sicherungsbügel 51 dargestellt. Dieser Sicherungsbügel 51 kann um eine Achse 52 geschwenkt werden, so dass daran angelenkte Elemente in den verschiebeweg des Turbinenlagers 26 singreifen können, und so eine freie Bewegung des Turbinanlagers 26 entlang der Rollenbahnen abbremsen und verhindern kann. In der dargestellten Position ist der Sicherungsbügel 51 verriegelt. Die Entriegelung und Freigabe des Verschiebewegs erfolgt durch Anheben des Sicherungsbügels 51 aus der dargestellten Position.

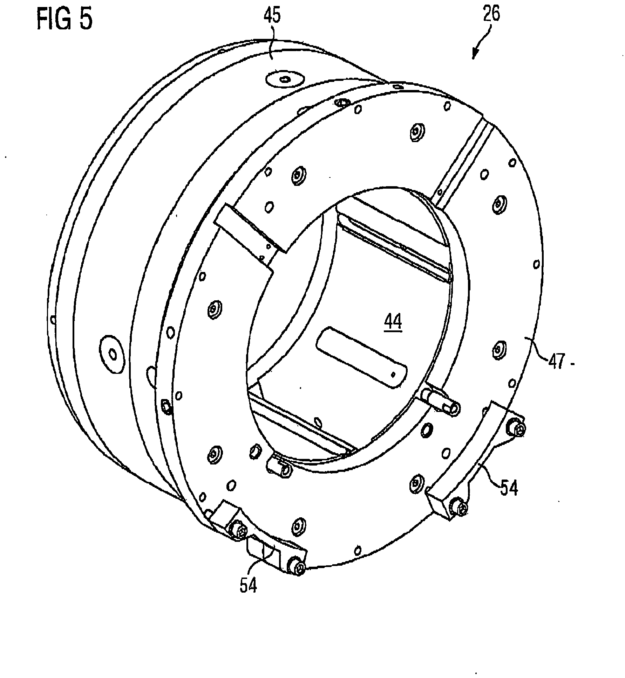

FIG 5 zeigt die perspektivische Darstellung des Turbinenlagers 26 mit einer Abdeckplatte 47, einem Lagerring 51 und mehreren Lagersegmenten 44 mit daran angeordneten. Gleitelementen 54.

Selbstverständlich ist es mit der gezeigten Vorrichtung 30 und den beschriebenen Verfahren auch möglich, sogenannte Dummy-Lager durch bestimmungsgemäße Turbinenlager auszutauschen. Dummy-Lager sind zumeist anstelle der bestimmungsgemäßen Turbinenlager hilfsweise für den Rotortranaport und/oder Gasturbinentransport eingebaut, um währenddessen Beschädigungen an dem bestimmungsgemäßen Turbinenlager zu vermeiden.

Insgesamt betrifft die Erfindung somit ein Verfahren und eine Vorrichtung 30 zur Durchführung des Verfahrens zur Montage/Demontage eines Turbinenlagers 26 oder eines Lagersegments einer vorzugsweise stationären Turbomaschine mit einem vorzugsweise hälftig teilbaren Gehäuse bei geschlossenem Gehäuse mit den Arbeitsschritten:
a) Abstützen des Rotors 12 oder/und Halten des Rotors 12 zur Befreiung des Turbinenlagers 26 von der Gewichtskraft des Rotors 12,
b) Befestigen einer Trägerplatte 34 an einem Turbinenlagergehäuse 10, Anbringen von zwei zueinander parallelen, schienenartigen Trägern 36 an der Trägerplatte 34 und Befestigen eines Querträgers 40 an Enden 38 der Träger 36,
c) Befestigen einer Widerlagerplatte 43 mit mindestens zwei Druck-/Zugstangen 46 am Turbinenlagergehäuse 10 und Befestigen der Druck-/zugstangen 46 am Turbinenlager 26 sowie das Lösen der Befestigung des Turbinenlagers 26 vom Turbinenlagergehäuse 10 und Herausziehen des in seiner Betriebslage befindlichen Turbinenlagers 26 aus dem Turbinenlagergehäuse 10 mit Hilfe der Druck-/Zugstangen 46.

Mit Hilfe der vorgeschlagenen Lösung kann die Stillstandszeit von stationären Turbomaschinen verkürzt und die Verfügbarkeit erhöht werden.

## Patentansprüche

1. Verfahren zur Demontage eines Turbinenlagers (26) oder eines seiner Bestandteile einer vorzugsweise stationären Turbomaschine bei geschlossenem Gehäuse,
mit den Arbeitschritten:
a) Abstützen des Rotors (12) oder/und Halten des Rotors (12)
zur Befreiung des Turbinenlagers (26) von der Gewichtskraft des Rotors,
b) Befestigen einer Trägerplatte (34) an einem Turbinenlagergehäuse (10), Anbringen von zwei zueinander parallelen, schienenartigen Trägern (36) an der Trägerplatte (34) und Befestigen eines Querträgers (40) an den der Trägerplatte (34) gegen-üborliegenden Enden (38) der Träger (36),
c) Lösen der Befestigung des Turbinenlagers (26) vom Turbinenlagergehäuse (10) und
d) Herausziehen des Turbinenlagers (26) oder eines seiner Bestandteile aus dem Turbinenlagergehäuse (10).

2. verfahren nach Anspruch 1,
bei dem vor dem Arbeitzschritt d)
für jeden Träger (36) am Turbinenlager (26) ein Gleitelement (54) befestigt wird.

3. Verfahren nach einem der Ansprüche 1 oder 2,
bei dem vor oder nach dem Arbeitsschritt b) eine Widerlagerplatte (43) mit mindestens zwei Druck-/zugstangen (46) am Turbinenlagergehäuse (10) und die Druck-/Zugstangen (46) am Turbinenlager (26) befestigt werden und das Herausziehen mit Hilfe der Druck-/Zugstangen (46) erfolgt.
